# EUROPEAN PATENT SPECIFICATION

(11) **EP 2 268 720 B1**
(45) Date of publication and mention of the grant of the patent: **03.09.2014**
(21) Application number: 09723969.3
(22) Date of filing: 27.03.2009
(51) Int. Cl.: C08J 5/24, B29B 11/16, B29B 15/12, B29C 70/44, B29C 70/54, B29K 707/04, B29K 63/00, B29K 77/00, B29K 105/24, B29K 105/08, B29K 709/08

(54) **COMPOSITE MATERIALS**
VERBUNDWERKSTOFFE
MATÉRIAUX COMPOSITES

(30) Priority: 27.03.2008 GB 0805597
(43) Date of publication of application: 05.01.2011
(60) Divisional application: 13160724.4
(73) Proprietor: Gurit (UK) Ltd., Newport Isle of Wight PO30 5WU (GB)
(72) Inventor: PARTINGTON, Nicholas, Duncan, Isle of Wight PO31 7JR (GB); SPENCER, Paul, John, Isle of Wight PO31 8QG (GB); JONES, Daniel, Thomas, Isle of Wight PO31 7FG (GB)
(74) Representative: Jenkins, Peter David
(86) International application number: PCT/GB2009/000823
(87) International publication number: WO 2009/118536

(56) References cited:
- EP-A2- 0 223 061
- US-A- 4 024 305
- GIBSON ET AL: "Dynamic mechanical Behavior of Fiber reinforced Composites: Measurement and Analysis", JOURNAL OF COMPOSITE MATERIALS, SAGE PUBLICATIONS, USA, vol. 10, 1 October 1976 (1976-10-01), pages 325-341, XP009145088, ISSN: 0021-9983
- GIBSON ET AL: "A Forced Vibration Technique for Measurement of Material Damping", EXPERIMENTAL MECHANICS, SPRINGER NEW YORK LLC, US, vol. 17, no. 8, 1 August 1978 (1978-08-01) , pages 297-302, XP009145087, ISSN: 0014-4851
- RONALD F GIBSON: "Complex Moduli of Chopped Fiber and Continuous Fiber Composites: Comparison of Measurements with Estimated Bounds", JOURNAL OF COMPOSITE MATERIALS, SAGE PUBLICATIONS, USA, vol. 14, no. 2, 1 January 1980 (1980-01-01), pages 155-167, XP009145064, ISSN: 0021-9983, DOI: DOI:10.1177/002199838001400207
- DOMINGUEZ J C ET AL: "Chemorheological study of the curing kinetics of a phenolic resol resin gelled", EUROPEAN POLYMER JOURNAL, PERGAMON PRESS LTD. OXFORD, GB, vol. 46, no. 1, 1 January 2010 (2010-01-01), pages 50-57, XP026771471, ISSN: 0014-3057, DOI: DOI:10.1016/J.EURPOLYMJ.2009.09.004 [retrieved on 2009-09-04]
- DOMINGUEZ J C ET AL: "Kinetic study of a phenolic-novolac resin curing process by rheological and DSC analysis", THERMOCHIMICA ACTA, ELSEVIER SCIENCE PUBLISHERS, AMSTERDAM, NL, vol. 498, no. 1-2, 20 January 2010 (2010-01-20), pages 39-44, XP026815327, ISSN: 0040-6031 [retrieved on 2009-09-30]
- C.T. SUN ET AL.: "Internal damping of short-fiber reinforced polymer matrix composites", COMPUTERS & STRUCTURES, vol. 20, no. 1-3, 1985, pages 391-400,
- IN-BOG LEE ET AL.: "Rheologic properties of flowable, conventional hybrid, and condensable composite resins", DENTAL MATERIALS, vol. 19, 2003, pages 298-307,

## Description

The present invention relates to a prepreg for manufacturing a fibre-reinforced composite material. The present invention further relates to method of manufacturing an elongate structural member of fibre-reinforced composite material and to a use of a prepreg for manufacturing an elongate structural member of a fibre-reinforced composite material.

It has been known for many years in the field of fibre-reinforced composite materials to provide a prepreg which comprises a layer of fibrous reinforcement impregnated with a structural polymer resin. The amount of structural polymer resin is carefully matched with the amount of fibrous reinforcement. Accordingly, the prepreg may be used in a method for forming a fibre-reinforced composite material, in which a multilayer stack of prepregs is provided having a desired shape and configuration, and then is subjected to heating so that the structural polymer resin melts and then solidifies to form a single unified resin matrix in which the fibrous reinforcement is disposed in the desired fibre orientation. The amount of resin in the stack is sufficient to make a fibre-reinforced structural article from the stack of prepregs which has the desired mechanical properties. Typically, the structural polymer resin is a thermosetting resin, most typically an epoxy resin, which is cured to form the solid resin matrix. The fibres may be selected from a variety of materials, most typically comprising glass fibres or carbon fibres.

It is very well known to provide prepregs in which the structural polymer resin is fully impregnated into the layer of fibrous reinforcement. This provides the outer major surfaces of the prepreg with a resin surface, distributes the fibres substantially uniformly throughout the prepreg resin so that the fibres are uniformly embedded within the resin and minimise the presence of inadvertent voids within the initial resin layer. This provides the advantage that the resin surface can be slightly tacky to assist lay up of the prepregs into the mould by supporting the prepreg at a desired position as a result of the adhesion of the prepreg by the tacky resin surface to an adjacent surface. In addition, the full impregnation of the fibrous reinforcement obviates the need for the structural polymer resin to flow significantly the curing phase, and ensures that the fibres wet out uniformly during the curing phase.

However, one particular problem with fully impregnated prepregs is that when a stack of such prepregs is formed, air can be trapped between the adjacent prepreg plies, with the result that in the final cured resin matrix of the fibre reinforced composite material inter-ply voids can exist. The presence of these voids can significantly reduce the mechanical properties of the composite material. As the layers of fully impregnated prepregs are progressively built up to form a multilayer stack thereof during the prepreg lay-up process, air can be trapped between the adjacent prepreg layers. The tackiness of the resin surfaces of the adjacent prepreg layers increases the possibility of air being trapped between the plies at the prepreg interfaces.

In an attempt to overcome this undesirable formation of inter-ply voids, it has been more recently proposed to provide prepregs which are only partially impregnated with the structural polymer resin so that a layer of dry fibre reinforcement is present on one or both of the major surfaces of the prepreg. Such a known partially impregnated prepreg, or semipreg, is manufactured by the applicant and sold under the registered trade mark SPRINT ®.

Such partially impregnated prepregs provide the advantage that when the prepregs are laminated as a stack, the layer of dry fibre reinforcement permits, during an initial vacuum consolidation phase, air to be evacuated through the dry fibre reinforcement progressively as full wet out of the dry fibrous reinforcement occurs on melting of the structural polymer resin. During vacuum consolidation of the prepregs, the stack of prepregs is subjected to a negative pressure, i.e. a vacuum, to assist air removal from between the adjacent prepregs and the regions of dry fibre reinforcement. The regions of dry fibre reinforcement are progressively wetted out by the multi-structural polymer resin under the applied vacuum prior to subsequent curing. This partially impregnated prepreg structure therefore provides the advantage that inter-ply voids between adjacent plies tend to be reduced or even eliminated.

It is known to use prepregs for manufacturing a wide variety of products, having a wide variety of thicknesses, shapes and volumes, and desired mechanical properties. One particular application for composite materials is the manufacture of structural elements in the form of elongate spars or beams which are required to exhibit a high mechanical stiffness and compressive strength. For such spars or beams, in order to maximise the mechanical stiffness and compressive strength, it is desired to provide fibres which primarily are oriented along the direction of the elongate spar or beam, in particular are unidirectional fibres.

In contrast, to provide composite materials having a sheet-like construction, or providing a torsional strength, it would be desirable to provide biaxially oriented fibres.

However, when manufacturing such structural spars or beams which incorporate unidirectional fibres extending along the length of the spar or beam, there is a technical problem when such partially impregnated prepregs are employed having outer layer surfaces of dry fibre reinforcement. The technical problem is that the outer unidirectional dry fibres which are not impregnated with the structural polymer resin tend to be easily distorted in a transverse direction within the plane of the prepreg. When the prepregs are assembled together as a multi-laminar stack, this can cause the unidirectionally oriented fibres to become non-linear, causing some degree of fibre waviness, distortion or curvature in the plane of the resultant composite material. Such non-linearity of the unidirectional fibres can lower the compressive strength of the structural member, such as a spar.

Furthermore, when such partially impregnated prepregs are assembled together in a multi-laminar stack to form a structural member, during vacuum consolidation of the prepregs, the multi-laminar stack of prepregs can shrink in thickness, a phenomenon known in the art as "de-lofting". This "de-lofting" induces some out-of plane waviness to the uni-directional fibre which lowers the compressive mechanical properties, as the fibres will buckle earlier under compressive loads.

In addition, when manufacturing such structural spars or beams which incorporate unidirectional fibres extending along the length of the spar or beam, there is a further technical problem when fully impregnated prepregs are employed. There is a strong tendency for intra ply voids to be formed, which can significantly lower the mechanical properties of the structural member.

JP-A-08/183129 discloses a sound insulating damping material and does not relate to the structural properties of a fibre-reinforced composite material. JP-A-2003/002990 discloses a prepreg comprising carbon fibers impregnated with two types of epoxy resin and a thermoplastic resin to provide high winding property, tackiness and drape. US-A-2007/179461 discloses hot-melt silicone pressure-sensitive adhesives for an ostomy or wound care appliance. WO-A-2005/075554 discloses a fibre-reinforced composite material having a polyolefin resin having a particular relaxation time. JP-A-2007/161797 discloses a character testing method for a prepreg in which the half-hardening state of the prepreg is controlled digitally independent of the kind of resin or the structure of the prepreg.

The present invention at least partially aims to overcome these technical problems of known prepregs for the manufacturing of elongate structural members in the form of spars or beams.

Accordingly, the present invention provides a prepreg for manufacturing a fibre-reinforced composite material, the prepreg comprising at least one layer of fibrous reinforcement fully impregnated by a matrix resin material, wherein:
(a) either (i) the at least one layer is the sole prepreg layer in the prepreg or (ii) the prepreg comprises a sandwich structure of two or more resin layers, the sandwich structure comprising at least one outermost fully impregnated layer of a first resin, and an adjacent layer of a second resin which has a lower viscosity than the first resin, and the at least one layer is the at least one outermost layer; and
(b) the resin material of the at least one layer has a phase angle δ between the complex modulus G* and the storage modulus G', and the value of the phase angle δ increases by at least 25° over a temperature range of from 10 to 25°C.

Preferred features are defined in dependent claims 2 to 13.

As explained in greater detail hereinbelow, the surface of the resin material may exhibit low tack, in particular a typical lay-up temperatures used in the composite material art. This enables the surface temporarily to be placed and held in a desired position against a mould surface or against an adjacent resin material surface of similar or identical properties. The low tack permits repositioning of the prepreg as required. Consequently, any adjacent resin material surfaces are unadhered, to the extent that they do not form a strong or permanent bond therebetween, and may still be temporarily tacked together as a result of the surface properties of the low tack resin material, but are not permanently attached or difficult to separate. Some embodiments of the present invention disclosed hereinbelow are described with reference to a Tack Test Table which provides a quantification of the degree of tack, in particular low tack, which may be exhibited by the resin material surfaces, By forming only a low or lightly tacked connection between the adjacent touching surfaces, and not a permanent bond, or a bond requiring a high separation force, the adjacent surfaces are not sealed together and so do not inhibit airflow therebetween because of the formation of continuous air paths therebetween.

Optionally, the value of the phase angle δ, between the complex modulus G* and the storage modulus G', is at least 50° at at least one value of temperature within the range of from 12.5 to 25°C.

As explained in greater detail hereinbelow, when the phase angle δ is high, i.e. towards 90°, the resin tends to behave as a viscous liquid and so it can be deformed into a set position during lay-up of the prepreg but it can exhibit some (or high) tack (or surface adhesion), whereas when the phase angle δ is low, i.e. towards 0°, the resin tends to behave as an elastic solid and so it cannot be deformed into a set position during lay-up of the prepreg and it exhibits low (or no) tack.

The present inventors have found that there is a technical advantage in selecting prepreg resins for which the phase angle δ varies with temperature over a range of temperatures encompassing typical storage and lay-up temperatures for prepregs. In general, for some prepreg resins, at lower temperatures the phase angle δ is low and at higher temperatures the phase angle δ is high, and a transition occurs between low and high phase angle δ within a particular temperature range.

In particular, the present inventors have found that by having a relatively low phase angle δ at a typical storage temperature, for example no more than 50° at a typical storage temperature of less than 10°C and a relatively high phase angle δ at a typical lay-up temperature, for example up to about 70° at a typical lay-up temperature range of 20 - 25°C, with a sharp transition of at least 25° between the low and high phase angle δ values across the temperature range of from 10 to 25°C, then the lay-up and vacuum consolidation can be carried out under ambient factory or workshop conditions to achieve a balance between good drape/deformability and good escape of inter-laminar air between adjacent prepreg plies.

Within the temperature range of from 10 to 25°C, the preferred resins for use in accordance with this further aspect of the present invention transition between low and high phase angle δ, which means that across that transition there is a useful temperature range, which is typically present in a workshop or factory used for manufacturing fibre-reinforced composite materials, over which the value of the phase angle δ is at a central value, for example from 50 to 70°. This means that the prepreg resin can exhibit the desired combination of low tack and deformability over a temperature range that is readily easy to achieve or control within the ambient temperature conditions typically encountered in a workshop or factory. At such a phase angle value, the resin can reliably exhibit the desired combination of low tack and deformability.

The present invention further provides a method of manufacturing an elongate structural member of fibre-reinforced composite material, the method comprising the steps of:
(a) providing a plurality of prepregs according to the present invention;
(b) assembling the plurality of prepregs as an elongate stack thereof;
(c) subjecting the stack to a vacuum to consolidate the stack and remove air from between the adjacent prepregs of the stack; and
(d) curing the matrix resin material to form the elongate structural member.

Preferably, in step (b) the stack is assembled within a body composed of partially impregnated prepregs and the stack is surrounded by fibrous reinforcement of the partially impregnated prepregs.

Preferably, the elongate structural member is a spar within a wind turbine blade.

The present invention further provides the use of a prepreg according to the present invention for manufacturing an elongate structural member of fibre-reinforced composite material, in particular a spar or beam.

The present invention is predicated on the finding by the present inventors that a prepreg for the manufacture of an elongate structural member, such as a spar or beam, can be provide with a combination of properties which are currently regarded by persons skilled in the art of composite materials as being undesirable in prepregs - high resin viscosity, high prepreg stiffness and low tack. This finding of the inventors has resulted in a prepreg structure which accommodates the fact that the vacuum consolidation of the multilayer stack of prepregs to form the elongate structural member can be carried out so as to require only a relatively short air path length, typically up to about 500 mm. This is because the elongate structural member typically has a maximum width of 1 metre, and air can be evacuated in a transverse direction in opposite directions extending from the longitudinal center of the elongate member.

When manufacturing a product in which the elongate structural member is integrally formed within other composite laminate sections of the product, such as a wind turbine blade where each unidirectional spar is surrounded by biaxial composite material, the evacuation of air is assisted by the stack of prepregs to form the elongate structural member being surrounded, during the vacuum consolidation phase, by dry fibrous reinforcement. These dry fibres have high permeability and permit the transport of trapped gasses back to the vacuum source in a large composite moulding. Such dry fibrous reinforcement may be present in a semipreg, or in a product such as the applicant's SPRINT® material, which comprises as a discrete central resin layer with dry fibre outer surfaces.

In addition, the multilayer stack of prepregs to form the elongate structural member can be substantially flat, so that each prepreg as it is placed down to form the stack can be substantially planar. Therefore, each prepreg to form the stack does not require mechanical flexibility to drape onto a curved or undulating surface with any curvature having a small radius. Instead, the prepregs can exhibit a high degree of stiffness and rigidity, and the stiffness of the individual prepregs of the stack positively assists air evacuation from between the prepregs and a reduction in intra-laminar voids. The stiffness and rigidity tend to be higher in the longitudinal direction when the fibres are unidirectional (UD) fibres oriented in the longitudinal direction, the fibre orientation restricting flexing of the prepreg along a transverse line.

Yet further, by selecting a highly viscous matrix resin for the prepreg, this not only assists the provision of a highly stiff prepreg but also ensures that any spacing to form gaps between the prepregs is maintained during and after prepreg lay-up to assist air evacuation during vacuum consolidation. The resin also has low tack and so reduces the mutual adhesion of adjacent prepreg surfaces, which also assists air evacuation by reducing the formation of closed pockets of intra-laminar air which would prevent or restrict air escape during vacuum consolidation.

Such a highly viscous matrix resin may be the sole resin in the fully impregnated prepreg. Alternatively, the fully impregnated prepreg may comprise a sandwich structure of two or more resin layers, the sandwich structure comprising at least one, preferably two opposed, outermost layers of the highly viscous matrix resin, as a first resin, and an adjacent, preferably central, layer of a second resin which has a lower viscosity than the layer or layers of the first resin. Such a second resin provides a more drapable resin, so that the prepreg can exhibit the combination of (a) surface properties (on one or more preferably both major surfaces) to assist air evacuation during vacuum consolidation, as described above, and (b) bulk properties of a high level of drape.

Accordingly, in some embodiments of the prepreg according to the present invention the matrix resin material is the sole resin in the fully impregnated prepreg. Alternatively, in other embodiments of the prepreg according to the present invention the fully impregnated prepreg comprises a sandwich structure of two or more resin layers, the sandwich structure comprising at least one outermost layer of a first resin providing the surface of the resin material, and an adjacent layer of a second resin which has a lower viscosity than the first resin.

Preferably, such a sandwich structure comprises at two opposed outermost layers of the first resin and a central layer of the second resin which has a lower viscosity than the first resin.

Optionally, the second resin has a storage modulus G' of from 1 x 10³ Pa to less than 3 x 10⁵ Pa and/or a loss modulus G" of from 1 x 10⁴ Pa to less than 2 x 10⁶ Pa. Optionally the second resin has a complex viscosity of from 1 x 10³ Pa to less than 5 x 10⁵ Pa.s. Optionally, the second resin has a phase angle δ between the complex modulus G* and the storage modulus G' which is above 70° over a temperature range of from 10 to 25°C.

Each fully impregnated prepreg ply has a low initial air content within the prepreg, lower than for a partially impregnated prepreg, and this in turn reduces the presence of voids within the cured composite material.

The fully impregnated prepreg structure retains the unidirectional fibres in the correct longitudinal alignment, and there is little or no distortion of the fibres in a transverse direction. This not only increases the mechanical properties of the structural member, in particular as compared to the use of semipregs in which misalignment is problematic, but also decreases the lay-up times compared to semipregs, because semipregs require careful positioning when forming the prepreg stack in order to minimise inadvertent distortion of the exposed outer dry fibres. The fully impregnated prepreg structure also avoids the de-lofting and in-plane waviness problems associated with the use of semipregs.

Embodiments of the present invention will now be described by way of example only, with reference to the accompanying drawings, in which:
Figure 1 is a schematic perspective drawing of a prepreg to form a fibre-reinforced composite material in accordance with a first embodiment of the present invention;
Figure 2 is an enlarged schematic perspective drawing of part of a multi-laminar stack of the prepregs of Figure 1 prior to curing to form a fibre-reinforced composite;
Figure 3 is a schematic drawing of the fibre-reinforced composite produced from the multi-laminar stack of prepregs of Figure 2 after resin curing;
Figure 4 is a schematic drawing of a cross-section through a wind turbine blade incorporating structural spars manufactured using the prepreg of Figure 1;
Figure 5 is a schematic drawing of a portion of a wind turbine blade manufactured incorporating a spar manufactured from the prepreg of Figure 1;
Figure 6 is a photograph of a fibre-reinforced composite produced in accordance with a further embodiment of the present invention; and
Figure 7 is a photograph of a fibre-reinforced composition produced using a fully impregnated prepreg not in accordance with the present invention;
Figure 8 illustrates the relationship between complex viscosity, storage modulus and loss modulus for a viscoelastic material;
Figures 9 to 12 are graphs showing the relationship between, respectively, storage modulus, loss modulus, complex viscosity and ramp rate viscosity with respect to temperature for resins in accordance with an Example of the present invention and Comparative Examples;
Figure 13 is a graph showing the relationship between the phase angle δ and temperature for resins in accordance with Examples of the present invention and Comparative Examples; and
Figure 14 is a schematic perspective drawing of a prepreg to form a fibre-reinforced composite material in accordance with a second embodiment of the present invention.

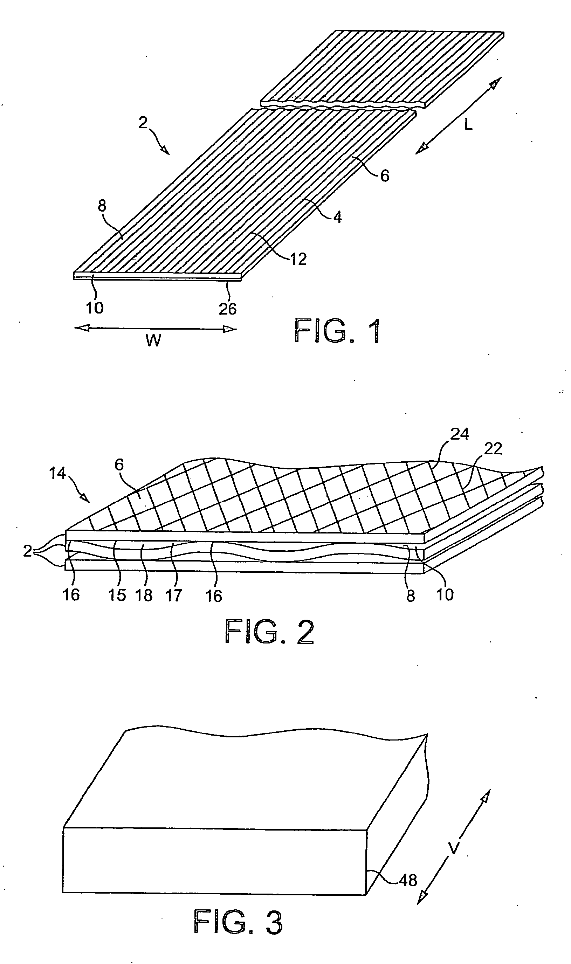

Referring to Figure 1, there is shown a prepreg 2 in accordance with a first embodiment of the present invention. For clarity of illustration, some dimensions in the drawings are exaggerated and only some of the fibres are shown.

The prepreg 2 comprises a layer of fibrous reinforcement 4 that is fully impregnated by a matrix resin 6. The full impregnation provides that the opposed major surfaces 8, 10 of the prepreg 2 comprise resin surfaces. The resin 6 is typically an epoxy-functional resin including a latent curing agent, as is known in the art. The fibrous reinforcement 4 comprises fibres 12 made of glass, carbon, aramid or similar materials. The fibres 12 are unidirectional (UD), being oriented in a common longitudinal direction L. Typically, the prepreg 2 has an indeterminate or unspecified length in the longitudinal direction L of orientation of the fibres 12, and is supplied on a reel. The prepreg 2, when used to manufacture an elongate structural member as described hereinbelow, has a relatively narrow width W, so that an elongate spar or beam can be manufactured. However, the prepreg may be manufactured by the formation of an initial wider sheet of unspecified length, with the sheet subsequently being slit longitudinally into a plurality of narrower strips, each defining a respective prepreg 2.

In Figure 1 the spar is shown for simplicity as a single planar body. However, other shapes and configurations may be employed, and in particular to modify the flexural modulus of the spar along its length, it is known to change the section width. In this case trapezium or triangular shaped sections, as well as parallel strips, may be also cut from the wider sheet to avoid wasting any of the prepreg material.

Referring to Figure 2, the resin 6 of the prepreg 2 is provided with particular properties so that when a multi-laminar stack 14 of the prepregs 2 is formed, and the multi-laminar stack 14 is subjected to a vacuum in a consolidation step, air can readily be evacuated that is present near the surfaces 15 of the prepregs 2 and between the prepreg 2 plies at the interfaces 17 therebetween. In particular, the resin 6 is selected so as to have a relatively high viscosity and a relatively low tack. The combination of the resin 6 and unidirectional fibres 12 (for clarity of illustration the fibres are not shown in Figure 2) is selected so as to provide a relatively high stiffness, in both (a) the longitudinal length direction, which is the direction of orientation of the unidirectional fibres 12, and (b) the transverse direction orthogonal thereto.

This combination of technical features provides that each prepreg 2 layer of the stack 14 is relatively rigid as compared to known prepregs. Macroscopically, the prepreg layers exhibit local areas of surface planarity. This can cause the presence of non-contacting areas of the opposed facing major surfaces 8, 10 of adjacent prepregs 2.

Accordingly, when two adjacent prepreg 2 layers are stacked together; the two adjacent relatively rigid surfaces 8, 10 do not coincide along a single planar interface, but rather tend to remain separated therefrom over relatively large areas, separated by contacting portions 16 of the adjacent surfaces 8, 10, thereby to define a gap or separation 18 between the facing surfaces 8, 10 of the prepreg 2 plies. The adjacent surfaces 8, 10 are interconnected by a random array of contact portions 16 which are spaced by areas of non-contact provided by the gaps or separations 18.

In contrast, if the prepreg 2 plies were relatively flexible, for example as flexible as some typical known prepregs, the two prepreg 2 plies would flex and flow so that the adjacent surfaces 8, 10 would be complementary, with an upper ply being draped under the action of gravity, or from the pressure used to applying subsequent layers on top of the pre-preg stack, so as to have a lower surface closely matching the upper surface of the lower ply adjacent thereto.

By providing relatively rigid prepregs 2, incorporating relatively high viscosity resin, in accordance with the present invention, such a draping effect is minimised and the adjacent prepreg surfaces 8, 10 are not complementary, thereby maintaining relatively large separations or gaps 18 at the prepreg interfaces 17.

Such relatively large separations or gaps 18 can be enhanced by the provision of an initially roughened surface for the major prepreg surfaces 8, 10. In addition, the opposed major surfaces 8, 10 of each prepreg 2 have a microstructure that is not geometrically planar because of the properties of the resin surfaces, discussed hereinbelow.

Such a surface roughness enhances the creation and maintenance of separation between the surfaces 8, 10 of the adjacent relatively rigid prepreg 2 plies. The surface roughness can be provided by impressing into the resin surface 22 an array of channels 24. For example, the array of channels 24 can be formed by providing an embossed liner sheet 26 which is temporarily adhered to the outer resin surface 8, 10 as a result of the inherent tack of the resin 6, as shown on the lower resin surface 10 in Figure 1 (the upper liner sheet previously on resin surface 8 has been removed). Channels 24 may be provided in one or both outermost resin surfaces 8, 10. The provision of such liner sheets 26 is well known in the prepreg art to protect the resin surface, and to prevent the resin from adhering inadvertently to adjacent resin surfaces when the prepreg is wound into a reel, for example. The liner sheets 26 are removed immediately prior to formation of the stack 14.

However, by providing a liner sheet 26 having an embossed surface, with outwardly projecting ridges that impress channels 24 within the underlying resin surface 22 thereby deliberately to introduce an array of channels 24 in the resin surface 22, this can enhance airflow at the adjacent prepreg 2 interfaces during the vacuum consolidation stage. For example, the array of channels 24 may comprise two mutually inclined sets of parallel lines defining diamond-shaped channels 24 in the resin surface 22. The channels 24 typically extend in directions that are inclined to the longitudinal direction of the prepreg, and inclined to the longitudinal direction of any unidirectional fibres in the prepreg. For example, the channels 24 may be oriented at +45/-45 degrees or +60/-60 degrees to the longitudinal direction of the prepreg and/or of any such unidirectional fibres in the prepreg. The channels 24 may have a typical depth of up to 250 microns, for example 50 to 150 microns, and may have a typical width of up to 100 microns, for example 20 to 80 microns. The pitch between adjacent parallel channels may vary, but for example may be up to 250 microns, for example about 50 microns.

The behaviour of thermosetting pre-preg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. In viscoelastic materials the stress and strain will be out of phase by an angle δ. The individual contributions making the complex viscosity are defined as
G' (Storage Modulus) = G*cos δ
G" (Loss Modulus) = G*sin δ

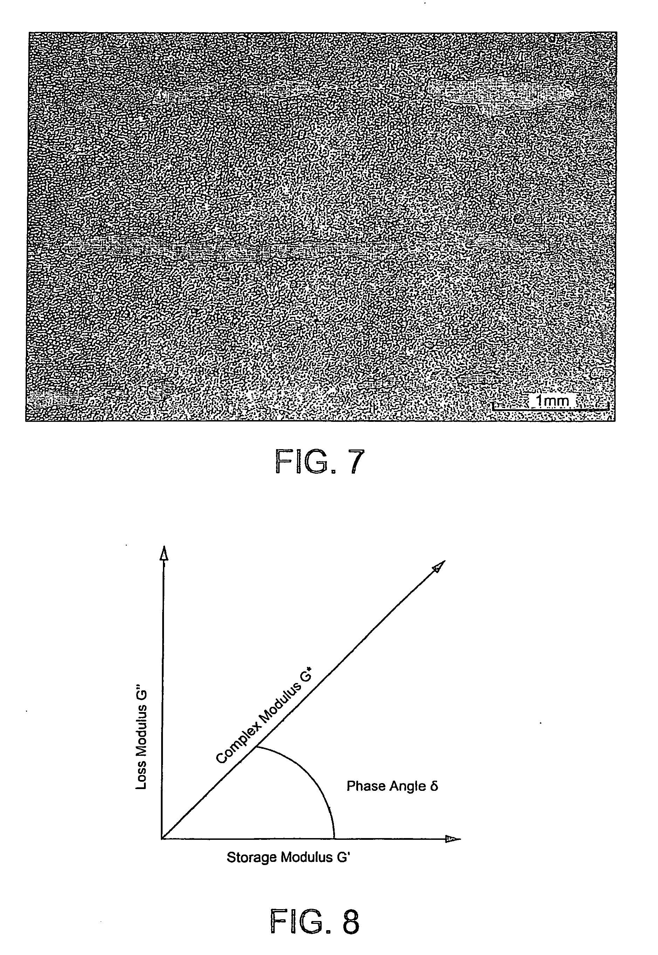

This relationship is shown in Figure 8.

G' relates to how elastic the material is and defines its stiffness.

G" relates to how viscous a material is and defines the damping, and liquid non recoverable flow response of the material.

For a purely elastic solid (glassy or rubbery), G"=0 and the phase angle δ is 0°, and for a purely viscous liquid, G'=0 and the phase angle δ is 90°.

To prevent the air channels during the lay-up assembly process and applying the initial vacuum a high resistance to flow is preferred. The storage modulus characterises the initial handling and rigidity of the pre-preg and a material with a high storage modulus will not compress into intimate contact and maintain an air-path on the initial application of the vacuum pressure. The loss modulus G" indicates the irreversible flow behaviour and a material with a high loss modulus G" is also desirable to prevent the early creep-like flow and maintain an open air path for longer.

Therefore the resin used in the prepregs of the present invention has a high storage modulus and a high loss modulus, and correspondingly a high complex modulus, at a temperature corresponding to a typical lay-up temperature, such as room temperature (20°C).

In this specification, the viscoelastic properties, i.e. the storage modulus, loss modulus and complex viscosity, of the resin used in the prepregs of the present invention were measured at application temperature (i.e. a lay-up temperature of 20°C) by using a TA Instruments AR2000 rheometer with disposable 25mm diameter aluminium plates. The measurements were carried out with the following settings: an oscillation test at decreasing temperature reducing from 40°C down to -10°C at 2°C/min with a controlled displacement of 1x10-4 rads at a frequency of 1 Hz and a gap of 1000µm.

Typically, the stiffness of the viscoelastic prepreg is characterised by the resin exhibiting a high elastic rheological response. The resin rheology is characterised by a storage modulus G' of the resin, preferably between 3 x 10⁵ Pa and 1 x 10⁸ Pa at 20°C, more preferably from 1 x 10⁶ Pa to 1 x 10⁷ Pa, yet more preferably from 2 x 10⁶ Pa to 4 x 10⁶ Pa. The higher the storage modulus at room temperature, the greater the air transport properties of the prepreg stack. However, the upper limit of the storage modulus is limited because otherwise the pre-preg would become too rigid and would develop a tendency to snap as the prepreg is being laminated even onto the gentle curvature typical in a wind turbine spar.

In the manufacture of a structural member in the form of a spar or beam using the prepreg of the present invention, preferably the resin 6 has a high loss modulus G" between 2 x 10⁶ Pa and 1 x 10⁸ Pa at 20°C, more preferably from 5 x 10⁶ Pa to 1 x 10⁷ Pa, yet more preferably from 7 x 10⁶ Pa to 9 x 10⁶ Pa.

The resin material preferably has a high complex viscosity at 20°C of from 5 x 10⁵ Pa to1 x 10⁷ Pa.s, more preferably from 7.5 x 10⁵ Pa to 5 x 10⁶ Pa.s, yet more preferably from 1 x 10⁶ Pa to 2 x 10⁶ Pa.s.

Furthermore, as stated above the viscosity of the resin 6 in the prepreg 2 is relatively high. This provides that prior to the curing stage, which is typically carried out an elevated temperature, for example at a temperature greater than 75°C, a typical curing temperature being 80°C or higher, the resin exhibits low or even negligible flow properties. The resin material preferably has a viscosity of from 5 to 30 Pa.s at 80°C, more preferably from 10 to 25 Pa.s at 80°C.

In this specification, the resin flow viscosity during the cure cycle was measured using a TA Instruments AR2000 rheometer with disposable 25mm diameter aluminium plates. The measurement was carried out with the following settings: increasing temperature from 30 to 130°C 2°C/min with a shear stress of 3.259Pa, gap: 1000µm.

This results in the technical effect that when the adjacent prepreg 2 plies are formed into the multi-laminar stack 14, substantially no flow of the resin 6 occurs at the adjacent resin surfaces 8, 10 either under the action of gravity or under the action of any applied atmospheric pressure as a result of the vacuum consolidation, which pressure can typically be about 1 MPa (i.e. about 1 atmosphere). This resistance to resin flow, under any likely applied pressure during the curing stage, as a result of providing a highly viscous resin maintains any inter-ply separation prior to melting of the resin 6 during the curing stage.

If, instead of a high viscosity resin which is used in the preferred embodiments of the present invention to provide a highly stiff prepreg ply, a low viscosity resin was used, then any localised pressure applied to the pre-preg from the laminating procedure may also trap air pockets between the layers, because the lower viscosity resin would permanently flow and form an air tight seal around islands of trapped air in the laminate stack.

Furthermore, the high viscosity resin 6 has a low surface tack. By reducing the surface tack, when adjacent prepregs 2 are stacked together, there is a reduced tendency of adhesion between the adjacent prepreg surfaces 8, 10 which in turn enhances the ability of air to flow between the interfaces during the vacuum consolidation stage. By reducing the inter-ply surface tack, any spacing or separation between the adjacent surfaces 8, 10 tends to be of a larger dimension, in a direction within the plane of the adjacent surfaces, which enhances the possibility of escape of air between the surfaces 8, 10 during the vacuum consolidation phase. There is also a reduced possibility of isolated pockets of air being trapped between the prepreg plies at the interfaces therebetween.

In this specification, surface tack of the resin is measured according to the following testing protocol:
Surface Tack Testing Protocol
1) Allow prepreg sample to stand at Lab temperature (22°C +/- 2°C) for approximately 10 minutes.
2) Remove the backer on one side.
3) Fold a sample of the prepreg over on its self and stick sides together.
4) Apply light pressure.
5) Carefully peel the prepreg apart and measure the tack level according to the Tack Test Table below:

| Rating | Description |
|---|---|
| ZT - Zero Tack | |
| QC-0 | Does not stick at all. Surface dry to the touch. |
| LT - Low Tack - gloved finger easily removed after touching surface | |
| QC-1 | Sticks only with firm pressure. Parts very easily. Surface quite dry to the touch |
| QC-2 | Sticks with medium pressure. Parts very easily. Surface has some stickiness |
| QC-3 | Sticks with light pressure. Parts easily. Surface has some stickiness |
| MT- Medium Tack - gloved finger not easily removed after touching surface | |
| QC-4 | Sticks with little pressure. Parts easily. No fibre movement on parting |
| QC-5 | Sticks with little pressure. Parts with some effort. Little fibre movement on parting |
| QC-6 | Sticks with little/no pressure. Parts with some effort. Some fibre movement on parting |
| HT - High Tack - gloved finger left with resin on after touching surface | |
| QC-7 | Sticks with no pressure. Parts with effort. Fibre distorted on parting |
| QC-8 | Sticks with no pressure. Parts with much effort. Fibre distortion on parting & resin "strings" |
| QC-9 | Sticks with no pressure. Parts with much effort. High fibre distortion on parting & resin "strings" |
| XT - Extreme Tack - glove stretched or torn on attempting to remove it from the surface | |
| QC-10 | Sticks with no pressure. Cannot peel apart without destroying fabric/fibre alignment |

In accordance with the preferred embodiments of the present invention, preferably the surface tack ranges from QC-0 to QC-2 rating when tested according to that testing procedure.

When the prepregs 2 are formed into a multi-laminar stack 14 for forming a structural elongate member such as a spar, typically from 2 to 30 unidirectional prepreg layers are stacked to provide a thickness of uni-directional material. Depending on the spar design multiaxial material 54 is then added followed by repeat layers of the unidirectional prepreg, again another typically from 2 to 30 unidirectional prepreg layers are stacked to provide a further thickness of uni-directional material in the spar cap. This process can be repeated to give a final thickness in the ultimate spar cap from about 25 to 75 mm.

The aim is to maximise the amount of uni-directional material in the spar cap but to add the multi-axial fibres at strategic points to prevent the spar cap suffering a low transverse buckling resistance, provide sufficient shear transfer to the webs, and torsional rigidity, and to limit the thickness of uni-directional material to prevent shear cracking in the uni-directional (UD) stack, In general if glass fibre uni-directional pre-preg is used the thickness of the uni-directional elements is larger than if carbon uni-directional pre-preg is used, because an increased amount of biaxial material is needed to prevent shear cracking in the UD stack.

In a particularly preferred embodiment in which a spar within a wind turbine blade is manufactured, containing glass uni-directional sections formed from typically about 10-25 prepreg layers stacked together to provide a uni-directional thickness of from 10 to 25 mm and a final spar cap thickness of 20 to 70mm. In another preferred embodiment in which a spar within a wind turbine blade is manufactured, the spar contains carbon uni-directional sections formed from typically about 6 to 30 prepreg layers stacked together to provide a uni-directional thickness of from 3 to 16mm and a final thickness of 20 to 60mm. A spar 48 manufactured from a stack of the prepregs 2 is shown in Figure 3.

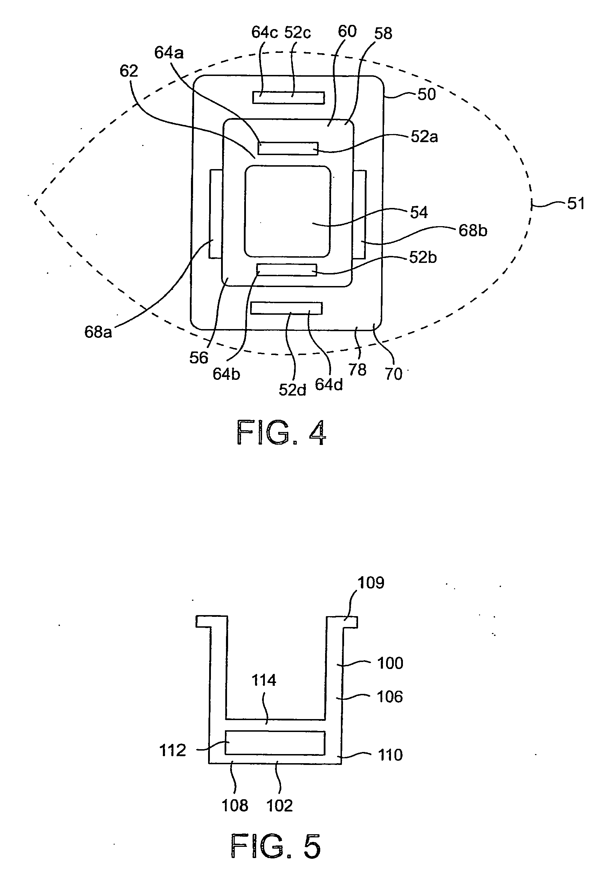

A typical construction for a structural portion 50 of a wind turbine blade 51 is illustrated in Figure 4. A cross-section through the structural portion 50 is shown. The structural portion 50 has a box beam construction consisting of elongate spars 52a, 52b, 52c, 52d, each of unidirectional fibre-reinforced composite material, disposed as two transversely separated spar pairs, there being an inner pair and an outer pair. The spars 52a, 52b, 52c, 52d extend along the length of the wind turbine blade 51 (shown in phantom) and are disposed on opposite sides of a central elongate cavity 54. The unidirectional spars 52a, 52b, 52c, 52d are the load carrying elements of the box beam construction, and provide shear and compression strength. The spars 52a, 52b, 52c, 52d are supported by biaxially oriented fibre composite material 56 which also provides torsional strength to the box beam construction.

In particular, the inner unidirectional spars 52a, 52b are disposed within an inner annular body 58 of biaxial composite material 60 surrounding the central cavity 54.

During manufacture, an elongate mandrel (not shown) is provided, the mandrel forming the central cavity 54 after removal of the structural portion 50 therefrom. Biaxial prepreg tape, typically a partially impregnated prepreg such as the applicant's SPRINT product as described above, having dry fibre outer surfaces, is helically wound around the mandrel to form part of an annular biaxial prepreg region 62. Then the unidirectional prepregs 2 of the present invention are laid up onto the biaxial prepreg tape on opposed sides of the mandrel to from elongate prepreg stacks 64, which are to form spars 52a, 52b following curing. The two opposed elongate stacks 64a, 64b are held in place by further helical winding of the biaxial prepreg tape around the unidirectional prepreg layups to form the remainder of the annular biaxial prepreg region 62, thereby to form an inner annular body 58 of biaxial prepreg encapsulating the two opposed elongate stacks 64a, 64b.

Then foam cores 68a, 68b are typically disposed on opposed sides of the inner annular body 58, the foam cores 68a, 68b being located on sides orthogonal to the sides which include the two opposed elongate stacks 64a, 64b. Thereafter further biaxially oriented partially impregnated prepreg material 70 is wrapped around the foam cores 68a, 68b and the inner annular body 58. Two further longitudinally oriented elongate unidirectional prepreg multi-laminar stacks 64c, 64d for forming two further outer spars 52c, 52d on opposite sides of the mandrel are laid up, and these are then wrapped with further biaxial prepreg tape to form an outer annular body 76 of biaxial prepreg encapsulating the two outer opposed elongate prepreg stacks 64c, 64d.

The entire prepreg lay-up 78 is then removed from the manual and subjected to vacuum consolidation and curing to form the box beam structure.

In such a configuration, the width of each spar is tapered along its length and, is typically from 50 to 1000 mm. This means that to achieve evacuation of any inter-ply air between adjacent unidirectional prepregs 2 in a stack, the maximum distance of air travel is typically only up to about 500 mm, which is a relatively short pathway for the air to escape from between the prepregs 2. The dry fibre of the partially impregnated prepreg that surrounds each spar-forming stack assists evacuation of the intra-laminar air.

After vacuum consolidation and curing of the resin of the unidirectional prepregs 2, the resultant spar, which is integrally incorporated into the box beam structure, has a very low void content because of the high inter-ply air evacuation and the low initial air content within each fully impregnated prepreg ply. Each spar also has very good mechanical properties because the full impregnation of the unidirectional fibres by the resin in the original prepreg 2 has maintained a uniformly linear unidirectional orientation for the fibres, with little or no undesired transverse distortion of the fibres, which enhances the load carrying properties of the spar.

Since the spar has an essentially planar cross-section, when the unidirectional prepregs are laid up, there is no necessity for there to be any significant drape of the prepreg to match an underlying curvature, particularly in the transverse direction of the prepreg. Accordingly, the highly stiff prepregs can nevertheless be located at the correct location in a prepreg lay-up on a mandrel, or alternatively within a mould, and the absence of drape, resulting from increased stiffness of the prepreg, surprisingly provides the technical advantage of enhanced evacuation at the interfaces. This reduces the potential for the formation of inter-ply voids in the spar.

This phenomenon of a fully impregnated stiff prepreg providing enhanced air evacuation, particularly intra-laminar air in a stack of such prepregs, is contrary to current practice, which advocates partial impregnation to provide flexible prepregs of increased drape to enhance air evacuation to lower the void content.

Figure 5 is a schematic drawing of a portion of a further wind turbine blade manufactured incorporating a spar manufactured from the prepreg of Figure 1. In this embodiment, one structural half 100 of a box bean structure is formed from prepregs. A layered stack 102 of biaxial semipregs is laid up into an elongate box mould 104 so as to form the sides 106 and bottom 108, and a topmost flange 109 of a biaxial lay-up 110. An elongate layered stack 112 of prepregs in accordance with the present invention, e.g. as in Figure 1, is disposed over the bottom 108 of the semipreg lay-up 110, and in particular over dry fibre outer layers thereof. The stack 112 is configured to form an elongate spar. Then the stack 112 is covered with a further layered stack 114 of biaxial semipregs. The entire prepreg lay-up structure is then subjected to vacuum consolidation and resin curing. The resultant fibre-reinforced composite comprises one structural half 100 of a box bean structure of a wind turbine blade. Two identical halves 100 are joined together to form a whole box bean structure by connecting together adjacent flanges 109 along the length of the structure.

In an alternative structure, the two halves are manufactured as a single integral body to form a unitary box beam structure similar to that shown in Figure 5.

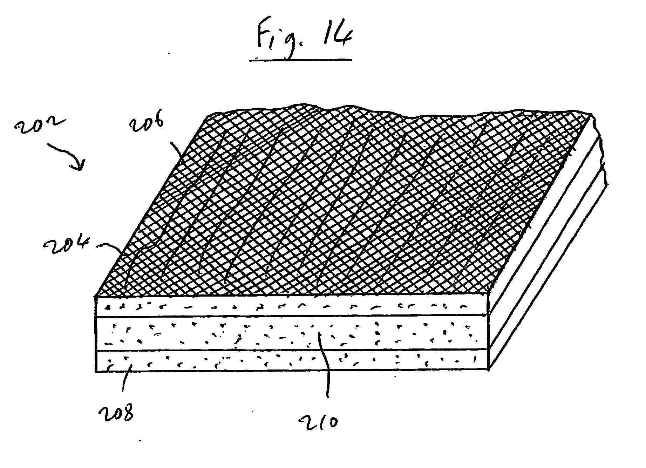

In the embodiment of the prepreg of Figure 1, the highly viscous matrix resin 6 is the sole resin in the fully impregnated prepreg 2. In an alternative embodiment as shown in Figure 14 which is a modification of that shown in Figure 1, the fully impregnated prepreg 202 comprises a sandwich structure 204 of two or more resin layers. The sandwich structure 204 comprises two opposed, outermost layers 206, 208 of the highly viscous matrix resin, as a first resin, and an adjacent central layer 210 of a second resin which has a lower viscosity than the layers of the first resin. The sandwich structure 204 may alternatively comprise only one outermost layer of the highly viscous matrix resin and an adjacent layer, which may also be outermost, of the lower viscosity second resin. Channels 24, as described above with reference to the embodiment of Figure 1, may be provided in one or both outermost resin surfaces. Such a second resin provides a more drapable resin, so that the prepreg can exhibit the combination of (a) surface properties (on one or more preferably both major surfaces) to assist air evacuation during vacuum consolidation, as described above, and (b) bulk properties of a high level of drape.

The second resin material may have a storage modulus G' of from 1 x 10³ Pa to less than 3 x 10⁵ Pa, more preferably from 1 x 10⁴ Pa to 2.5 x 10⁶ Pa and/or a loss modulus G" of from 1 x 10⁴ Pa to less than 2 x 10⁶ Pa, more preferably from 1 x 10⁵ Pa to 1.25 x 10⁶ Pa. The second resin material may have a complex viscosity of from 1 x 10³ Pa to less than 5 x 10⁵ Pa.s, more preferably from 1 x 10⁴ Pa to 2 x 10⁵ Pa.s. In addition, the second resin may have a phase angle δ between the complex modulus G* and the storage modulus G' which is relatively high and stable over a temperature range encompassing typical lay-up and storage temperatures for prepregs, such as from 10 to 25°C, so that the prepreg has good drapability properties over a wide working temperature range. Typically, the value of the phase angle δ is above 70°, more typically above 75°, over a temperature range of from 10 to 25°C. All these modulus and viscosity values are measured as described above for the first resin material.

The second resin material may be a thermosetting resin, such as an epoxy resin.

The present invention is further illustrated by the following non-limiting examples.

### Example 1

In this example, a multi-laminar stack of sixteen layers of elongate prepregs in accordance with the present invention was formed for the manufacture of an elongate spar. Each prepreg consisted of 1600g/m² of 4800 tex unidirectional E-glass fibres impregnated with 32 wt% of an epoxy resin, called "Resin Ex. 1" and having the properties summarised below, to give a final cured laminate thickness of 20mm. The resin "Resin Ex. 1" comprised an epoxy resin having the following properties:
Thermal reactivity was measured as characterised using Differential Scanning Calorimetry, (Mettler Toledo DSC821E). The programme used was from 25°C to 250°C at 10°C/min, cooled down to 25°C and rerun up to 150°C;

| | |
|---|---|
| ΔH (J/g) | 242 |
| Tonset (°C) | 133.4 |
| Tpeak (°C) | 150 |
| Tendset (°C) | 181.2 |
| Cold Tg2 (°C) | 9.7 |
| UTg2 (°C) | 104.5 |

Viscoelastic properties were measured at application temperature characterised by using a TA Instruments AR2000 rheometer with disposable 25mm diameter aluminium plates. The experiment was carried out with the following settings: an Oscillation experiment from 40 down to -10°C at 2°C/min with a controlled displacement of 1x10-4 rads at a frequency of 1 Hz and a gap of 1000µm.
Complex viscosity [η*] of 1.5 x 10⁵ Pa.s at the lay-up temperature of 20°C
Storage Modulus G' of 3.0x10⁶ Pa at the lay-up temperature of 20°C
Loss Modulus G" of 8.0 x10⁶ Pa at the lay-up temperature of 20°C

Resin flow viscosity during the cure cycle was measured using a TA Instruments AR2000 rheometer with disposable 25mm diameter aluminium plates. The experiment was carried out with the following settings: 30 to 130°C 2°C/min with shear stress of 3.259Pa, gap: 1000µm.

Minimum Viscosity of 3.15 Pa.s reached at 109°C

Viscosity of 20 Pa.s at 80°C at the chosen dwell temperature to give interlaminar flow and control the exotherm.

Each ply had dimensions 2m x 0.5m. Sixteen plies of each material were laid-up onto each other on a glass fibre composite mould tool. Both 2m edges and one 0.5m edge were sealed with flash tape, to allow breathing from one edge only, along the perimeter of the panel. A connection to the vacuum source was made at the unsealed edge using a strip of peel ply. Non-perforated release film was applied to the top of the laminate to prevent through thickness air connection. A breather fabric and vacuum bag were used to give an even vacuum consolidation on the entire material. Once sealed, a full vacuum was applied at room temperature for 30 minutes before the following cure cycle was applied:
Increase by 0.5°C/min to 80°C; then 4 hrs @ 80°C; then increase by 1°C/min to 110°C;
then 2 hrs @ 110°C.

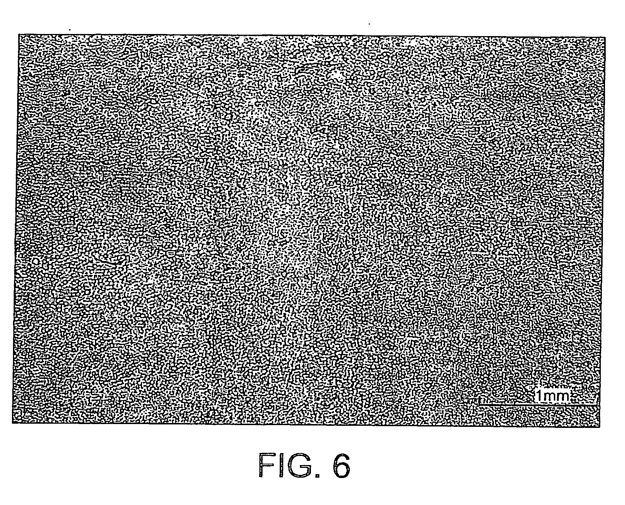

A cross-section of the resultant prepreg was taken from the mid section and images were captured using Olympus BX51 optical microscope at 2.5x Objective magnification, with a JVC KY-F70B digital camera at the highest void areas. The worse quality of the resultant spar is shown in Figure 6.

It may be seen that there is no inter-ply voiding and only a small amount of inter-ply voiding caused by non-full impregnation of the pre-preg during manufacture. To obtain the void content, Struers Scentis image analysis software was used to determine the void levels by using contrast thresholding and manual verification to highlight the voids and calculate the void area using an area method, known in the art. Three images were captured. The resultant void content values were; 1.7%, 2.1 % and 2.8%, giving a mean void level of 2.2%.

However, lower void content could be readily achieved by using a slower cure cycle to raise the impregnation period to achieve fuller impregnation. The primary result is that inter-ply voids are eliminated.

### Comparative Example 1

In the comparative example, a similar spar of the same dimensions was manufactured, using fully impregnated prepregs having the same fibres and resin content but a lower stiffness and lower viscosity Gurit WE91-1 epoxy resin, which is commercially available from the applicant. Gurit WE91-1 epoxy resin has the properties of loss and storage modulus, and complex viscosity, as summarised below in Table 2 for Comparative Example 6.

In particular, the Gurit WE91-1 resin comprised an epoxy resin having the following properties:
Thermal reactivity was measured as characterised using Differential Scanning Calorimetry, (Mettler Toledo DSC821E). The programme used was from 25°C to 250°C at 10°C/min, cooled down to 25°C and rerun up to 150°C.

**Table 1 - Resin thermal properties**

| **Property** | **Value** |
|---|---|
| ΔH (J/g) | 298 |
| Tonset (°C) | 140.5 |
| Tpeak (°C) | 151.5 |
| Tendset (°C) | 173.5 |
| Cold Tg2 (°C) | -3.3 |
| UTg2 (°C) | 117.7 |

Viscoelastic properties were measured at application temperature characterised by using a TA Instruments AR2000 rheometer with disposable 25mm diameter aluminium plates. The experiment was carried out with the following settings: an Oscillation experiment from 40 down to -10°C at 2°C/min with a controlled displacement of 1x10-4 rads at a frequency of 1 Hz and a gap of 1000µm.
Complex viscosity [η*] of 1.5 x10⁴ Pa.s at the lay-up temperature of 20°C
Storage Modulus G' of 2.1 x10⁴ Pa at the lay-up temperature of 20°C
Loss Modulus G" of 1.0 x 10⁵ Pa at the lay-up temperature of 20°C

Resin flow viscosity was measured during the cure cycle using a TA Instruments AR2000 rheometer with disposable 25mm diameter aluminium plates. The experiment was carried out with the following settings: 30 to 130°C 2°C/min with shear stress of 3.259Pa, gap: 1000µm.
Minimum Viscosity of 0.5 Pa.s reached at 112.5°C
Viscosity of 1.8 Pa.s at 80°C at the chosen dwell temperature to give interlaminar flow and control the exotherm.

The lay-up was done by the same operator concurrently using the same dimensions, the same number of layers, the same vacuum consumables, vacuum connection and vacuum source, and cured in the same oven and cure cycle, to ensure equal conditions as in Example 1. However, in this comparative example the prepreg/resin had the following different properties as summarised above.

A cross-section in the resultant prepreg was taken from the mid section and images were captured using Olympus BX51 optical microscope at 2.5x Objective magnification, with a JVC KY-F70B digital camera at the highest void areas. The worst quality of the resultant spar is shown in Figure 7. To obtain the void content, Struers Scentis image analysis software was used to determine the void levels by using contrast thresholding and manual verification to highlight the voids and calculate the void area using an area method, known in the art. Three images were captured. The resultant void content values were; 8.2%, 5.9% and 6.5% giving a mean void level of 6.9%

It may be seen that there is significant inter-ply voiding with large delamination type defects caused from the trapped air pockets during the lamination stages. These significant elongate inter-ply voids would significantly lower the mechanical properties, in particular the stiffness and compressive strength, of the spar and promote significant stress concentration points for damage growth and easy de-lamination to occur in the composite material. The total void content is significantly increased as compared to Example 1.

### Example 2 and Comparative Examples 2 to 6

The rheological behaviour of pre-pregs was tested and characterised using a rheometer to run experiments in two modes.

In a first flow experiment, a constant shear stress was applied to the pre-preg and the shear strain was recorded. This test was used to characterise the lower viscosity behaviour of the pre-preg to achieve resin flow and wet-out during its cure cycle.

In a second experiment, an oscillating shear strain test was used to study the viscoelastic behaviour at the typical pre-preg lay-up temperatures to characterise the higher viscosity and viscoelastic handling behaviour of the material

Prepregs known in the art, as Comparative Examples 2 to 6 and a prepreg in accordance with an embodiment of the present invention, as Example 2, were characterised using a TA Instruments AR2000 rheometer with disposable 25mm diameter aluminium plates as described above to measure the storage modulus, the loss modulus and the complex viscosity.

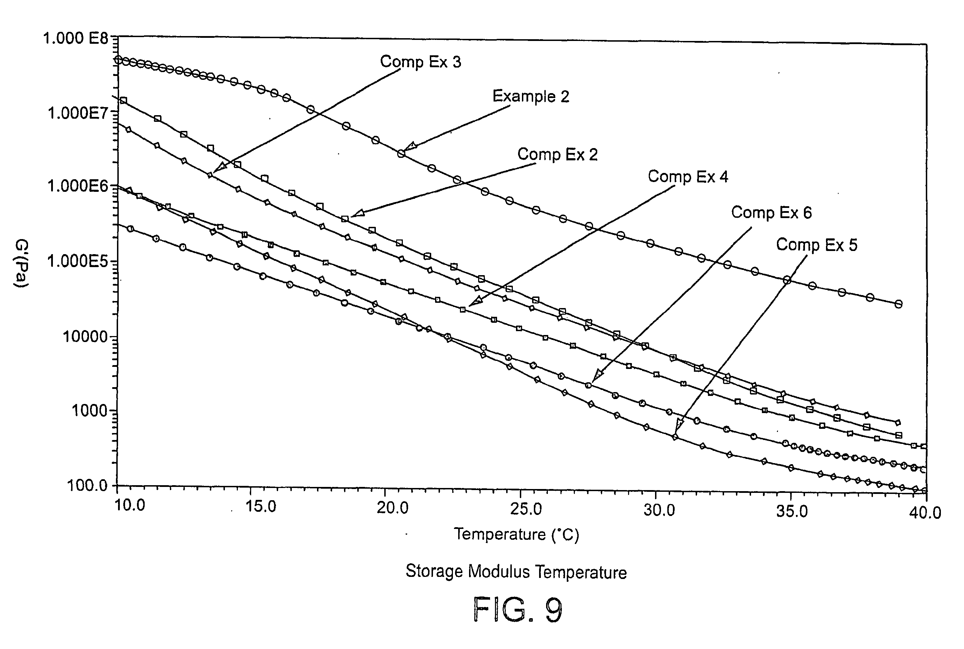

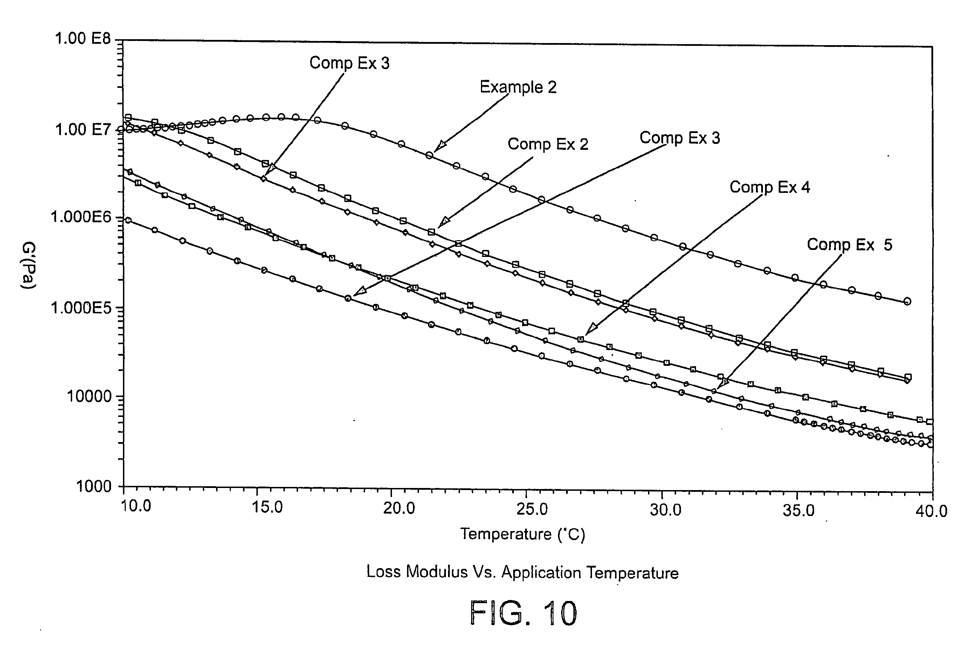

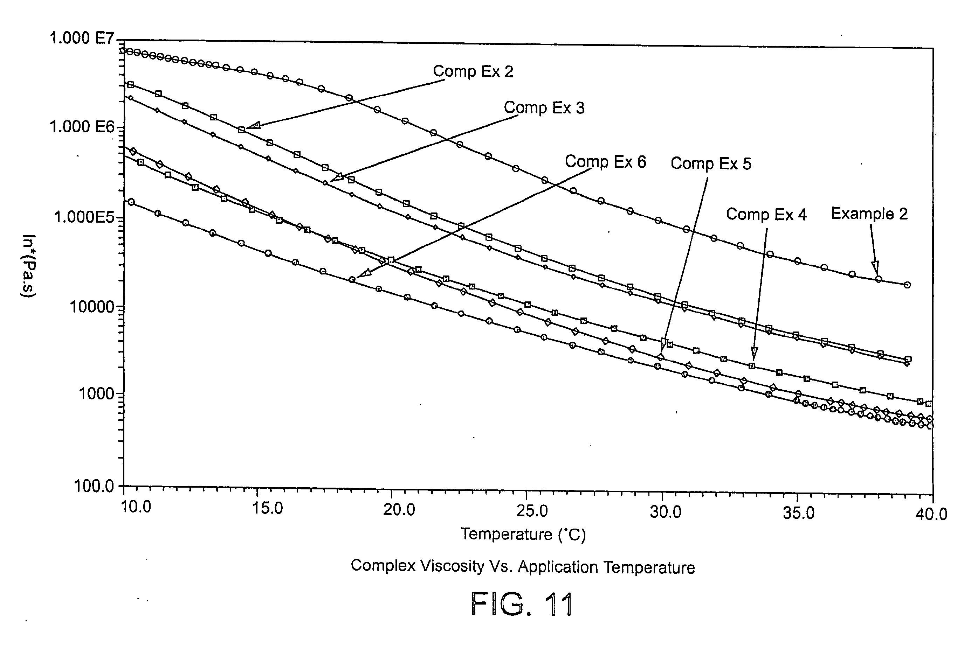

The results are shown in Figures 9 to 11 and in Table 2, which shows the measured storage modulus, loss modulus, phase angle and complex viscosity for the materials tested at 20°C.

**Table 2 - Properties at 20°C**

| **System** | **G' (Storage Modulus)/ Pa** | **As % of Example 2** | **G"(Loss Modulus)/Pa** | **As % of Example 2** | **Phase angle δ /deg** | **Complex viscosity [n^{*}] /Pa.s** | **As % of Example 2** |
|---|---|---|---|---|---|---|---|
| **Example 2** | **3.00 x 10⁶** | **100.0%** | **8.00 x 10⁶** | **100.0%** | **66** | **1.50 x 10⁶** | **100.0%** |
| Comp. Ex 2 | 2.50 x 10⁵ | 8.3% | 1.10 x 10⁶ | 13.8% | 77 | 1.90 x 10⁵ | 12.7% |
| Comp. Ex 3 | 1.50 x 10⁵ | 5.0% | 8.50 x 10⁵ | 10.6% | 79 | 1.50 x 10⁵ | 10.0% |
| Comp. Ex 4 | 6.00 x 10⁴ | 2.0% | 2.00 x 10⁵ | 2.5% | 74 | 4.00 x 10⁴ | 2.7% |
| Comp. Ex 5 | 3.50 x 10⁴ | 1.2% | 2.00 x 10⁵ | 2.5% | 82 | 4.00 x 10⁴ | 2.7% |
| Comp. Ex 6 | 2.10x10" | 0.7% | 1.00 x 10⁵ | 1.3% | 77 | 1.50 x 10⁴ | 1.0% |

At the typical application temperature of 20°C the significant increase in viscosity for Example 2 as compared to the Comparative Examples 2 to 6 can be clearly seen.

In a partially impregnated or dry fibre resin film product, such as the Applicant's pre-preg sold under the trade mark SPRINT®, the resin must also flow during the cure to fully impregnate the fibre. However, if as in the present invention, the resin fully impregnates the fibrous reinforcement, only minimal flow is then required in the cure cycle. This permits the use of higher viscosity resin material at room temperature.

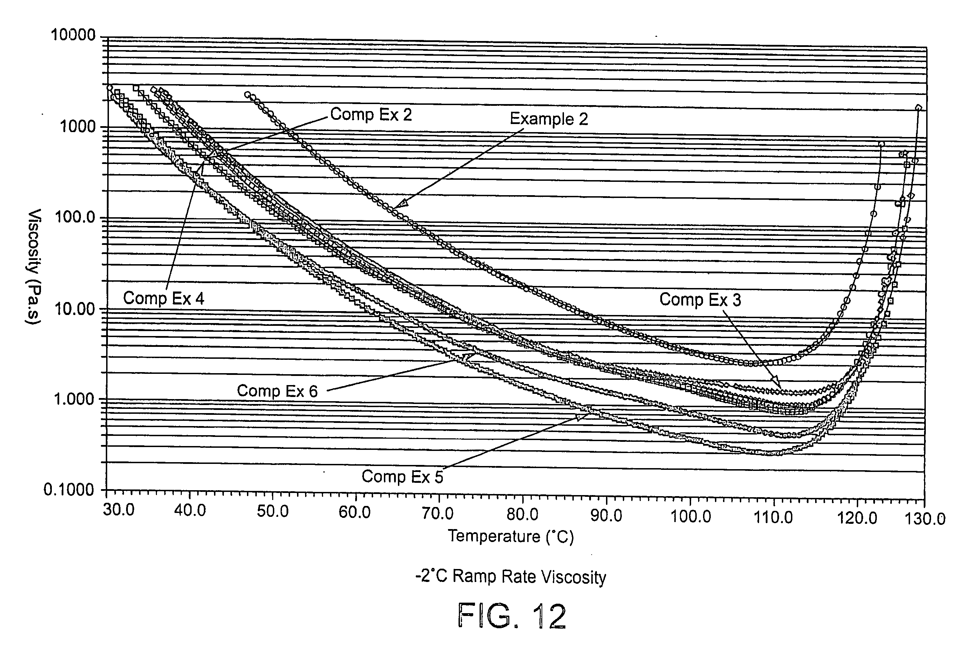

To determine the flow behaviour the following experiments, to measure resin flow viscosity for the resins of Example 2 and Comparative Examples 2 to 6, were performed using a TA Instruments AR2000 rheometer with disposable 25mm diameter aluminium plates as described above. The experiment was carried out with the following settings: 30 to 130°C 2°C/min with shear stress of 3.259Pa, gap: 1000µm. The results are shown in Figure 12.

During the manufacture of a typical thick spar an intermediate dwell may be used at 80-90°C rather than continuing to ramp to a higher final cure temperature. A too high viscosity at 80-90°C can limit the quality of the final section. The resin viscosity of the pre-preg of Example 2 measured at 90°C is typically 3 to 6 times higher, being about 9 Pa.s, as compared to the viscosity of the resin of typical conventional flexible pre-preg systems used for vacuum processing, represented by Comparative Examples 2 to 6, ranging from about 1.5 to 3.0 Pa.s.

### Examples 3 to 5 and Comparative Examples 7 to 10

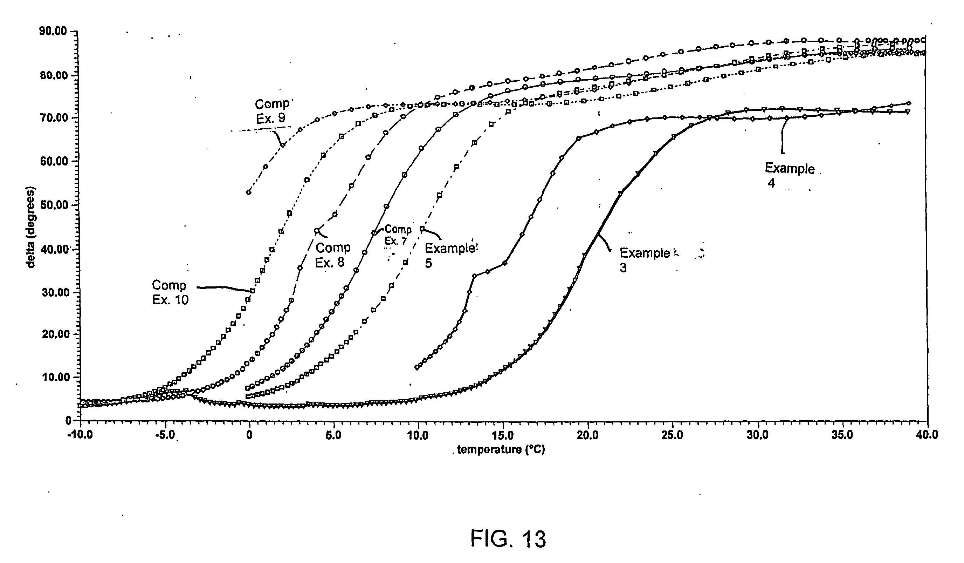

Seven resins were tested to determine the relationship between their phase angle δ and to temperature. Figure 13 is a graph showing the relationship between the phase angle δ and temperature for the seven resins in accordance with Examples 3 to 5 of the present invention and Comparative Examples 7 to 10.

It may be seen that for Examples 3 to 5, the transition between low the phase angle δ and high phase angle δ, represented by a sharp change in the phase angle δ, occurred at a temperature range of from 10 to 25°C. This means that at at least one temperature value within that range the phase angle δ is at a value of from 50 to 70°, which in turn means that the resin has a good combination of low tack and deformable properties at at least one temperature value within that temperature range. A prepreg incorporating such a resin is deformable yet has good inter-laminar venting of any air present between adjacent prepreg plies during vacuum consolidation.

In contrast, for Comparative Examples 7 to 10, the transition between low the phase angle δ and high phase angle δ, represented by a sharp change in the phase angle δ, occurred at a lower temperature, generally lower than 10°C. This means that above about 10°C, and certainly at about 20°C, the phase angle δ is at a high value, typically above 70°. This in turn means that the resin has a high tack at a typical factory or workshop ambient temperature. A prepreg incorporating such a resin would exhibit poor inter-laminar venting of any air present between adjacent prepreg plies during vacuum consolidation because the high tack would trap air between the adjacent resin surfaces.

Table 3 shows the change in the phase angle δ for the seven resins and in particular shows the change over a temperature range of 10 to 25°C representing a typical ambient temperature range of a factory or workshop. The lower end of the range also reflects the temperature of the prepreg itself during lay-up, rather than ambient temperature, if the prepreg has been conventionally stored in a cold-store prior to use to minimise resin migration during storage. For the Examples, the resin has a change in phase angle δ of at least 25° over the temperature range of 10-25°C.

**Table 3**

| | Change in phase angle δ, in °, over temperature range of 10-25°C |
|---|---|
| Example 3 | 60.43 |
| Example 4 | 57.3 |
| Example 5 | 35.4 |
| Comp. Example 7 | 18.2 |
| Comp. Example 8 | 12.0 |
| Comp. Example 9 | 6.9 |
| Comp. Example 10 | 4.4 |

The sharp transition of the value of the phase angle δ for the prepreg resins for use in the present invention in an ambient temperature range of a factory or workshop provides the required resin properties within that range. This is a significant technical advance in providing good inter-laminar venting of prepreg stacks during vacuum consolidation.

## Claims

1. A prepreg for manufacturing a fibre-reinforced composite material, the prepreg comprising at least one layer of fibrous reinforcement fully impregnated by a matrix resin material, wherein:
(a) either (i) the at least one layer is the sole prepreg layer in the prepreg or (ii) the prepreg comprises a sandwich structure of two or more resin layers, the sandwich structure comprising at least one outermost fully impregnated layer of a first resin, and an adjacent layer of a second resin which has a lower viscosity than the first resin, and the at least one layer is the at least one outermost layer; and
(b) the resin material of the at least one layer has a phase angle δ between the complex modulus G* and the storage modulus G', and the value of the phase angle δ increases by at least 25° over a temperature range of from 10 to 25°C.

2. A prepreg according to claim 1 wherein the value of the phase angle δ, between the complex modulus G* and the storage modulus G', increases by a value of from 25 to 70°, optionally from 35 to 65°, over a temperature range of from 10 to 25°C.

3. A prepreg according to claim 1 or claim 2 wherein the value of the phase angle δ, between the complex modulus G* and the storage modulus G', is no more than 70° at at least one value of temperature within the range of from 12.5 to 25°C.

4. A prepreg according to any one of claims 1 to 3 wherein the resin material of the at least one layer has a storage modulus G' of from 2 x 10⁵ Pa to 1 x 10⁷ Pa and a loss modulus G" of from 7.5 x 10⁵ Pa to 1 x 10⁷ Pa.

5. A prepreg according to any one of claims 1 to 4 wherein the resin material of the at least one layer has a complex viscosity of from 1 x 10⁵ Pa to1 x 10⁷ Pa.s.

6. A prepreg according to any one of claims 1 to 5 wherein the resin material of the at least one layer has a viscosity of from 5 to 30 Pa.s at 80°C.

7. A prepreg according to any one of claims 1 to 6 wherein the sandwich structure comprises two opposed outermost layers of the first resin and a central layer of the second resin.

8. A prepreg according to claim 7 wherein the second resin has a storage modulus G' of from 1 x 10³ Pa to less than 3 x 10⁵ Pa and/or a loss modulus G" of from 1 x 10⁴ Pa to less than 2 x 10⁶ Pa and/or a complex viscosity of from 1 x 10³ Pa to less than 5 x 10⁵ Pa.s.

9. A prepreg according to claim 7 or claim 8 wherein the second resin has a phase angle δ between the complex modulus G* and the storage modulus G' which is above 70° over a temperature range of from 10 to 25°C.

10. A prepreg according to any one of claims 1 to 9 wherein the resin material is an epoxy resin.

11. A prepreg according to any one of claims 1 to 10 wherein the prepreg is elongate in a longitudinal direction thereof and the fibrous reinforcement is unidirectional along the longitudinal direction of the prepreg.

12. A prepreg according to any one of claims 1 to 11 wherein the opposed major surfaces of the prepreg are embossed with an array of channels therein.

13. A prepreg according to claim 12 further comprising a liner sheet covering each of the opposed major surfaces of the prepreg, wherein the surface of the liner sheet contacting the adjacent resin surface is outwardly embossed and the embossed surface is pressed into the resin surface to form the array of channels.

14. A method of manufacturing an elongate structural member of fibre-reinforced composite material, the method comprising the steps of:
providing a plurality of prepregs according to any one of claims 1 to 13;
assembling the plurality of prepregs as an elongate stack thereof;
subjecting the stack to a vacuum to consolidate the stack and remove air from between the adjacent prepregs of the stack; and
curing the matrix resin material to form the elongate structural member.

15. Use of a prepreg according to any one of claims 1 to 13 for manufacturing an elongate structural member of fibre-reinforced composite material, in particular a spar or beam.

## Patentansprüche

1. Ein Prepreg zum Herstellen eines Faserverbundwerkstoffs, wobei das Prepreg zumindest eine Faserverstärkungsschicht umfasst, die völlig mit Harzmatrixmaterial imprägniert ist, und wobei:
(a) entweder (i.) diese zumindest eine Schicht die einzige Prepreg-Schicht des Prepregs ist oder (ii.) das Prepreg eine Sandwich-Struktur von zwei oder mehreren Harzschichten umfasst, wobei die Sandwich-Struktur zumindest eine völlig mit einem ersten Harz imprägnierte Außenschicht und eine angrenzende Schicht aus einem zweiten Harz mit einer niedrigeren Viskosität als der erste Harz aufweist, und wobei die zumindest eine Schicht die zumindest eine Außenschicht ist; und
(b) das Harzmaterial der zumindest einen Schicht einen Phasenwinkel δ zwischen dem komplexen Modul G* und dem Speichermodul G' hat und sich der Wert des Phasenwinkels δ über einen Temperaturbereich von 10 bis 25° C um mindestens 25° erhöht.

2. Ein Anspruch 1 entsprechendes Prepreg, wobei sich der Wert des Phasenwinkels δ zwischen dem komplexen Modul G* und dem Speichermodul G' über einen Temperaturbereich von 10 bis 25° C um einen Wert von 25 bis 70° bzw. wahlweise von 35 bis 65° erhöht.

3. Ein Anspruch 1 oder Anspruch 2 entsprechendes Prepreg, wobei der Wert des Phasenwinkels δ zwischen dem komplexen Modul G* und dem Speichermodul G' bei zumindest einem Temperaturwert im Bereich von 12,5 bis 25° C nicht mehr als 70° ist.

4. Ein einem der Ansprüche 1 bis 3 entsprechendes Prepreg, wobei das Harzmaterial der zumindest einen Schicht ein Speichermodul G' von 2 x 10⁵ Pa bis 1 x 10⁷ Pa und ein Verlustmodul G" von 7,5 x 10⁵ Pa bis 1 x 10⁷ Pa hat.

5. Ein einem der Ansprüche 1 bis 4 entsprechendes Prepreg, wobei das Harzmaterial der zumindest einen Schicht eine komplexe Viskosität von 1 x 10⁵ Pa bis 1 x 10⁷ Pa.s. hat.

6. Ein einem der Ansprüche 1 bis 5 entsprechendes Prepreg, wobei das Harzmaterial der zumindest einen Schicht bei 80° C eine Viskosität von 5 bis 30 Pa.s hat.

7. Ein einem der Ansprüche 1 bis 6 entsprechendes Prepreg, wobei die Sandwich-Struktur zwei gegenüber liegende Außenschichten des ersten Harzes und eine Mittelschicht des zweiten Harzes umfasst.

8. Ein Anspruch 7 entsprechendes Prepreg, wobei das zweite Harz ein Speichermodul G' von 1 x 10³ Pa bis weniger als 3 x 10⁵ bzw. ein Verlustmodul G" von 1 x 10⁴ Pa bis weniger als 2 x 10⁶ Pa bzw. eine komplexe Viskosität von 1 x 10³ Pa bis weniger als 5 x 10⁵ Pa.s hat.

9. Ein Anspruch 7 oder Anspruch 8 entsprechendes Prepreg, wobei das zweite Harz zwischen dem komplexen Modul G* und dem Speichermodul G' einen Phasenwinkel δ hat, der in einem Temperaturbereich von 10 bis 25° C über 70° liegt.

10. Ein einem der Ansprüche 1 bis 9 entsprechendes Prepreg, wobei das Harzmaterial ein Epoxidharz ist.

11. Ein einem der Ansprüche 1 bis 10 entsprechendes Prepreg, wobei das Prepreg in seiner Längsrichtung verlängert und die Faserverstärkung entlang der Längsrichtung des Prepregs unidirektional ist.

12. Ein einem der Ansprüche 1 bis 11 entsprechendes Prepreg, wobei die gegenüber liegenden Hauptflächen des Prepregs mit einer eingeprägten Anordnung von Kanälen versehen sind.

13. Ein Anspruch 12 entsprechendes Prepreg, das ferner eine Dichtungsbahn umfasst, die jede der gegenüber liegenden Hauptflächen des Prepregs abdeckt, wobei die Oberfläche der Dichtungsbahn, die mit der angrenzenden Harzfläche in Kontakt ist, mit einer äußeren Prägung versehen ist und die geprägte Oberfläche in die Harzfläche gepresst wird, um die Anordnung von Kanälen zu bilden.

14. Ein Anfertigungsverfahren eines langgestreckten Strukturbauteils aus Faserverbundwerkstoff, wobei das Verfahren die folgenden Schritte umfasst:
eine Vielzahl von Prepregs anordnen, die einem der Ansprüche 1 bis 13 entsprechen;
die Vielzahl von Prepregs zu einem langgestreckten Stapel zusammensetzen;
den Stapel einem Vakuum aussetzen, um den Stapel zu konsolidieren und Luft aus den Zwischenräumen der im Stapel angrenzenden Prepregs zu entfernen; und
das Harzmatrixmaterial aushärten, um das langgestreckte Strukturbauteil zu bilden.

15. Benutzung eines Prepregs in Übereinstimmung mit einem der Ansprüche 1 bis 13, um ein langgestrecktes Strukturbauteil aus Faserverbundwerkstoff, insbesondere einen Holm oder einen Balken, anzufertigen.

## Revendications

1. Un pré-imprégné destiné à la fabrication d'un matériau composite renforcé par des fibres, le pré-imprégné comprenant au moins une couche de renforcement par des fibres totalement imprégnée par un matériau de résine de matrice, dans lequel :
(a) soit (i) la au moins une couche est la seule couche pré-imprégnée dans le pré-imprégné ou (ii) le pré-imprégné comprend une structure en sandwich de deux couches de résine ou plus, la structure en sandwich comprenant au moins une couche la plus externe totalement imprégnée d'une première résine, et une couche adjacente d'une seconde résine qui possède une viscosité inférieure à celle de la première résine, et la au moins une couche est la au moins une couche la plus externe ; et
(b) le matériau de résine de la au moins une couche a un angle de phase δ entre le module complexe G* et le module de stockage G', et la valeur de l'angle de phase δ augmente d'au moins 25 ° , sur une plage de températures allant de 10 à 25°C.

2. Un pré-imprégné selon la revendication 1 dans lequel la valeur de l'angle de phase δ, entre le module complexe G* et le module de stockage G', augmente d'une valeur allant de 25 à 70°, optionnellement de 35 à 65°, sur une plage de températures allant de 10 à 25°C.

3. Un pré-imprégné selon la revendication 1 ou la revendication 2 dans lequel la valeur de l'angle de phase δ, entre le module complexe G* et le module de stockage G', n'est pas supérieure à 70° à au moins une valeur de température dans la plage allant de 12,5 à 25°C.

4. Un pré-imprégné selon l'une quelconque des revendications de 1 à 3 dans lequel le matériau de résine de la au moins une couche a un module de stockage G' allant de 2 x 10⁵ Pa à 1 x 10⁷ Pa et un module de perte G " allant de 7,5 x 10⁵ Pa à 1 x 10⁷ Pa.

5. Un pré-imprégné selon l'une quelconque des revendications de 1 à 4 dans lequel le matériau de résine de la au moins une couche a une viscosité complexe allant de 1 x 10⁵ Pa à 1 x 10⁷ Pa.s.

6. Un pré-imprégné selon l'une quelconque des revendications de 1 à 5 dans lequel le matériau de résine de la au moins une couche a une viscosité allant de 5 à 30 Pa.s à 80°C.

7. Un pré-imprégné selon l'une quelconque des revendications de 1 à 6 dans lequel la structure en sandwich comprend deux couches les plus externes opposées de la première résine et une couche centrale de la seconde résine.

8. Un pré-imprégné selon la revendication 7 dans lequel la seconde résine a un module de stockage G' allant de 1 x 10³ Pa à moins de 3 x 10⁵ Pa et/ou un module de perte G" allant de 1 x 10⁴ Pa à moins de 2 x 10⁶ Pa et/ou une viscosité complexe allant de 1 x 10³ Pa à moins de 5 x 10⁵ Pa.s.

9. Un pré-imprégné selon la revendication 7 ou la revendication 8 dans lequel la seconde résine a un angle de phase δ entre le module complexe G* et le module de stockage G' qui est supérieur à 70° sur une plage de températures allant de 10 à 25°C.

10. Un pré-imprégné selon l'une quelconque des revendications de 1 à 9 dans lequel le matériau de résine est une résine époxy.

11. Un pré-imprégné selon l'une quelconque des revendications de 1 à 10 dans lequel le pré-imprégné est allongé dans une direction longitudinale de celui-ci et le renforcement par des fibres est unidirectionnel le long de la direction longitudinale du pré-imprégné.

12. Un pré-imprégné selon l'une quelconque des revendications de 1 à 11 dans lequel les surfaces majeures opposées du pré-imprégné sont estampées d'un réseau de canaux en leur intérieur.

13. Un pré-imprégné selon la revendication 12 comprenant en outre une feuille de revêtement couvrant chacune des surfaces majeures opposées du pré-imprégné, dans lequel la surface de la feuille de revêtement contactant la surface de résine adjacente est estampée vers l'extérieur et la surface estampée est pressée dans la surface de résine pour former le réseau de canaux.

14. Un procédé de fabrication d'un élément structurel allongé de matériau composite renforcé par des fibres, le procédé comprenant les étapes de :
fournir une pluralité de pré-imprégnés selon l'une quelconque des revendications de 1 à 13 ;
assembler la pluralité de pré-imprégnés en une pile allongée de ceux-ci ;
soumettre la pile à un vide pour consolider la pile et retirer l'air entre les pré-imprégnés adjacents de la pile ; et
durcir le matériau de résine de matrice pour former l'élément structurel allongé.

15. Une utilisation d'un pré-imprégné selon l'une quelconque des revendications de 1 à 13 pour la fabrication d'un élément structurel allongé de matériau composite renforcé par des fibres, en particulier un longeron ou une poutre.
